# EUROPEAN PATENT APPLICATION

(11) **EP 4 043 530 A1**
(43) Date of publication of application: **17.08.2022**
(21) Application number: 20871347.9
(22) Date of filing: 30.09.2020
(51) Int. Cl.: C09J 11/08, C09J 189/00

(54) **PROTEIN ADHESIVE, JOINED BODY, AND METHOD FOR PRODUCING THE SAME**

(30) Priority: 30.09.2019 JP 2019180475
(71) Applicant: Spiber Inc., Tsuruoka-shi, Yamagata 997-0052 (JP)
(72) Inventor: CHANG, Yun-Hsiang, Tsuruoka-shi, Yamagata 997-0052 (JP)
(74) Representative: Handley, Matthew Edward
(86) International application number: PCT/JP2020/037253
(87) International publication number: WO 2021/066049

(57) **Abstract**

An object of the present invention is to provide a protein adhesive containing a protein, a joined body, and a method for producing the same. The protein adhesive of the present invention contains a protein of 50 KDa or less. The joined body of one embodiment is a joined body including a first object, a second object, and an adhesive layer interposed between the first object and the second object, in which the first object and the second object are joined by the adhesive layer, and the adhesive layer is an adhesive layer formed of a protein adhesive containing a protein of 50 KDa or less.

## Description

### Technical Field

The present invention relates to a protein adhesive.

### Background Art

Formaldehyde may be used for an adhesive used as a material for processing a molded body for the purpose of improving strength or the like. However, formaldehyde, which is a volatile organic compound (VOC), is highly toxic, and its emission into the air may adversely affect a human body. Therefore, an adhesive that does not contain formaldehyde is desired.

A protein adhesive is known as one of adhesives that do not contain formaldehyde (Non Patent Literature 1 and Patent Literatures 1 and 2).

On the other hand, an infiltration solidification treatment method is known as one of ground improvement methods for enhancing the strength of the ground. This is a method in which an injection material is injected into weak ground such as sand ground by an injection pump or the like to enhance shear strength of the ground (Non Patent Literature 4). The injection material is roughly divided into a non-chemical liquid system and a chemical liquid system. Examples of the non-chemical liquid include cement-based materials. However, in a case of a cement-based injection material, naturally-derived heavy metals such as chromium contained in a cement raw material are likely to elute due to clay minerals and organic substances contained in soil, which may cause soil contamination. Examples of the chemical liquid-based material include polymer chemicals such as acrylamide, urea, and urethane, in addition to water glass chemicals. However, soil generated during excavation of ground improved by cement, a urethane resin, or the like is currently treated as industrial waste since unnecessary substances such as a resin and cement are mixed.

Therefore, application of a biodegradable polymer degraded by an action of microorganisms that survive in the ground to a ground improvement injection material has been studied (Non Patent Literature 5). This literature focuses on biodegradable polypinyl alcohol (PVA) to examine its suitability as a ground improvement injector. However, applicability of another biodegradable polymer to the ground improvement injection material is still unknown.

### Citation List

### Patent Literature

Patent Literature 1: JP 2005-133224 A
Patent Literature 2: JP 2018-531169 A

### Non Patent Literature

Non Patent Literature 1: Takeyuki KINOSHITA, "Decrease of Formaldehyde Emission from Formaldehyde Resin Adhesives", Journal of the Adhesion Society of Japan, 38.6(2002): 212-216
Non Patent Literature 2: Ikue SAITO et al., "Estimation of Indoor Air Pollution by VOCs Emitted from Water-Based Adhesive", Journal of Society of Indoor Environment, 8.1(2005) : 15-26
Non Patent Literature 3: Frihart, Charles R., ChristopherG. Hunt, and Michael J. Birkeland. "Soy proteins as wood adhesives" In:Recent Advances in Adhesion Science and Technology, edited by Woiciech (Voytek) Gutowski, and Hanna Dodiuk. 2014; pp. 277-290. 16 (2014): 277-290
Non Patent Literature 4: Web Page of Office of Research Institute of Infiltration Solidification Treatment Method (URL: https://www.pgm-koho.jp/method/)
Non Patent Literature 5: Munehiko Kaga et al., Industrial Technology: Toyo University, Industrial Technology Research Institute Report, No. 36, pp. 44-47, 2014

### Summary of Invention

### Technical Problem

An object of the present invention is to provide a protein adhesive containing a protein, a joined body, and a method for producing the same.

### Solution to Problem

The present inventors have studied to effectively utilize residues derived from host cells using a protein as an adhesive, and have found a protein that does not contain formaldehyde and can be used as a protein adhesive.

The present invention provides the following [1] to [24] .
[1] A protein adhesive containing a protein of 30 KDa or more and 50 KDa or less.
[2] The adhesive according to [1], further containing a functional additive.
[3] The adhesive according to [1] or [2], in which a content of the protein of 30 KDa or more and 50 KDa or less is 20 mass% or more with respect to a total mass of the adhesive.
[4] The adhesive according to any one of [1] to [3], in which a main component of the protein of 30 KDa or more and 50 KDa or less is a membrane protein.
[5] The adhesive according to [4], further containing a ribosomal protein, a lipoprotein, and/or a glycoprotein.
[6] The adhesive according to any one of [1] to [5], in which a protein of less than 30 KDa is contained in an amount of 5 mass% or more with respect to a total mass of the adhesive.
[7] The adhesive according to [6], in which a main component of the protein of less than 30 KDa is a ribosomal protein.
[8] The adhesive according to any one of [1] to [7], in which the protein of 30 KDa or more and 50 KDa or less is a protein contained in a residue from a host cell,
   the host cell is a host cell producing a target substance, and
   the residue from the host cell is a cell residue obtained after the target substance is collected from the host cell.
[9] A protein adhesive containing a residue from a host cell,
   in which the host cell is a host cell producing a target substance, and
   the residue from the host cell is a cell residue obtained after the target substance is collected from the host cell.
[10] A joined body including: a first object; a second object; and an adhesive layer interposed between the first object and the second object,
   in which the first object and the second object are joined by the adhesive layer, and
   the adhesive layer is an adhesive layer formed of a protein adhesive containing a protein of 30 KDa or more and 50 KDa or less.
[11] A joined body including: a plurality of objects to be adhered; and an adhesive layer formed so as to wrap at least a part between the plurality of objects to be adhered and/or around the plurality of objects to be adhered, in which the adhesive layer is an adhesive layer formed of a protein adhesive containing a protein of 30 KDa or more and 50 KDa or less.
[12] The joined body according to [10] or [11], in which the adhesive further contains a functional additive, and the adhesive layer contains a functional 1 additive at least on a surface and/or an inner side thereof.
[13] The joined body according to any one of [10] to [12], in which the adhesive layer is a layer obtained by subjecting the adhesive to drying or heating and pressurizing treatment.
[14] The joined body according to any one of [10] to [13], in which a content of the protein of 50 KDa or less is 50 mass% or more with respect to a total mass of the adhesive layer.
[15] The joined body according to [12], in which the functional additive is cellulose.
[16] The joined body according to any one of [10] to [15],
   in which the protein of 30 KDa or more and 50 KDa or less is a protein contained in a residue from a host cell,
   the host cell is a host cell producing a target substance, and
   the residue from the host cell is an adhesive layer formed of a cell residue obtained after the target substance is collected from the host cell.
[17] A joined body including: a first object; a second object; and an adhesive layer interposed between the first object and the second object,
   in which the first object and the second object are joined by the adhesive layer,
   the adhesive layer is an adhesive layer formed of a protein adhesive containing a residue from a host cell, the host cell is a host cell producing a target substance, and the residue from the host cell is a cell residue obtained after the target substance is collected from the host cell.
[18] A joined body including: a plurality of objects to be adhered; and an adhesive layer formed so as to wrap at least a part between the plurality of objects to be adhered and/or around the plurality of objects to be adhered,
   in which the adhesive layer is an adhesive layer formed of a protein adhesive containing a residue from a host cell, the host cell is a host cell producing a target substance, and the residue from the host cell is a cell residue obtained after the target substance is collected from the host cell.
[19] A method for producing a joined body including a first object, a second object, and an adhesive layer interposed between the first object and the second object,
   in which the first object and the second object are joined by the adhesive layer,
   the adhesive layer is an adhesive layer formed of a protein adhesive containing a protein of 30 KDa or more and 50 KDa or less, and
   the production method includes joining the first object and the second object by sequentially laminating the first object, the adhesive, and the second object and forming the adhesive on the adhesive layer by drying and heating and pressurizing treatment.
[20] A method for producing a joined body including a plurality of objects to be adhered and an adhesive layer formed so as to wrap at least a part between the plurality of objects to be adhered and/or around the plurality of objects to be adhered,
   in which the adhesive layer is an adhesive layer formed of a protein adhesive containing a protein of 30 KDa or more and 50 KDa or less, and
   the production method includes joining the plurality of objects to be adhered by mixing the plurality of objects to be adhered and the adhesive and forming the adhesive on the adhesive layer by drying or heating and pressurizing treatment.
[21] A method for producing a joined body including a first object, a second object, and an adhesive layer interposed between the first object and the second object,
   in which the first object and the second object are joined by the adhesive layer,
   the adhesive layer is an adhesive layer formed of a protein adhesive containing a residue from a host cell, the host cell is a host cell producing a target substance, the residue from the host cell is a cell residue obtained after the target substance is collected from the host cell, and
   the production method includes joining the first object and the second object by sequentially laminating the first object, the adhesive, and the second object and forming the adhesive on the adhesive layer by drying and heating and pressurizing treatment.
[22] A method for producing a joined body including a plurality of objects to be adhered and an adhesive layer formed so as to wrap at least a part between the plurality of objects to be adhered and/or around the plurality of objects to be adhered,
   in which the adhesive layer is an adhesive layer formed of a protein adhesive containing a residue from a host cell, the host cell is a host cell producing a target substance, the residue from the host cell is a cell residue obtained after the target substance is collected from the host cell, and
   the production method includes joining the plurality of objects to be adhered by mixing the plurality of objects to be adhered and the adhesive and forming the adhesive on the adhesive layer by drying or heating and pressurizing treatment.
[23] A ground improvement injection material for enhancing ground strength, containing the adhesive according to any one of [1] to [9].
[24] A mortar analogue or a concrete analogue, containing the adhesive according to any one of [1] to [9].

### Advantageous Effects of Invention

According to the protein adhesive of the present invention, it is possible to provide an adhesive composition different from that of the related art, and it is possible to effectively utilize a cell residue discarded in the related art. In addition, the protein adhesive of the present invention can adhere different materials to each other, and further, an additional function can be added by adding a functional additive.

### Brief Description of Drawings

Fig. 1 illustrates photographs showing states of a waste centrifugal supernatant of Example 1 before and after being treated with a solvent containing ethanol, and after being left for one day.
Fig. 2 is a photograph of a state where residues from host cells of Example 2 are precipitated as a solid.
Fig. 3 is a photograph showing an analysis result of a protein in residues from host cells of Example 1.
Fig. 4 is a photograph showing an analysis result of a protein in the residues from the host cells of Example 2.
Fig. 5 is a graph showing a result of performing molecular weight analysis on the residues from the host cells of Examples 1 and 2 using an analysis software Image Lab.
Fig. 6 is a photograph showing a wood piece joined body of Example 3.
Fig. 7 is a photograph showing a wood piece body of Example 4.
Fig. 8 is a photograph of each of wood chip joined bodies (wood chip residue composite molded bodies) and a table showing a result of appearance observation.
Fig. 9 is a graph showing bending strength of the wood chip joined bodies (wood chip residue composite molded bodies).
Fig. 10 is a table showing results of a degree of fracture and appearance observation after a bending test of the wood chip joined bodies (wood chip residue composite resin molded bodies).
Fig. 11 is a photograph showing an analysis result of a protein in residues from host cells of Example 3.
Fig. 12 is a graph showing a result of performing molecular weight analysis on the residues from the host cells of Example 3 using an analysis software Image Lab.
Fig. 13 is a photograph of a state where a mortar analogue containing the residues from the host cells of Example 2 is applied to a substrate.
Fig. 14 is a photograph of a concrete analogue containing the residues from the host cells of Example 2.
   (a) illustrates concrete analogues molded into a cube, and
   (b) illustrates the concrete analogues molded into a cube and a cone.

### Description of Embodiments

### [Protein Adhesive]

A protein adhesive of one embodiment contains a protein of 30 Da or more and 50 KDa or less. The protein of 30 Da or more and 50 KDa or less is a main component of the protein adhesive, and a content thereof with respect to the total mass of the adhesive is 20 mass% or more, for example, 30 mass% or more, 35 mass% or more, 40 mass% or more, 50 mass% or more, 60 mass% or more, 70 mass% or more, 80 mass% or more, or 90 mass% or more, and for example, 90 mass% or less, 80 mass% or less, 70 mass% or less, 60 mass% or less, or 50 mass% or less. The protein of 30 kDa or more and 50 kDa or less is preferably contained in an amount of 40 mass% or more with respect to the total protein in the adhesive, and is contained in an amount of, for example, 50 mass% or more, 60 mass% or more, 70 mass% or more, 80 mass% or more, or 90 mass% or more, with respect to the total protein in the adhesive.

The main component of the protein of 50 KDa or less may be a membrane protein, and the protein adhesive may further contain a ribosomal protein, a lipoprotein, and/or a glycoprotein.

In addition, the protein adhesive may contain a protein of less than 30 KDa, and a main component of the protein of less than 30 KDa is a ribosomal protein. The protein of less than 30 KDa is contained in an amount of 5 mass% or more, for example, 10 mass% or more, 20 mass% or more, 30 mass% or more, or 40 mass% or more, with respect to the total mass of the adhesive, and is contained in an amount of, for example, 90 mass% or less, 80 mass% or less, 70 mass% or less, 60 mass% or less, or 50 mass% or less, with respect to the total mass of the adhesive. The protein of less than 30 kDa is preferably contained in an amount of 20 mass% or more or 40 mass% or more with respect to the total protein in the adhesive, and is contained in an amount of, for example, 50 mass% or more, 60 mass% or more, 70 mass% or more, 80 mass% or more, or 90 mass% or more, with respect to the total protein in the adhesive.

In the protein adhesive, the total amount of the protein of 50 kDa or less, that is, the total amount of the protein of 30 Da or more and 50 KDa or less and the protein of less than 30 KDa may preferably exceed 50 mass% with respect to the total mass of the adhesive, and the protein of 30 Da or more and 50 KDa or less and the protein of less than 30 KDa are contained in an amount of, for example, 60 mass% or more, 70 mass% or more, 80 mass% or more, or 90 mass% or more, with respect to the total mass of the adhesive. In addition, the protein of 50 kDa or less is preferably contained in an amount of 40 mass% or more with respect to the total protein in the adhesive, and is contained in an amount of, for example, 50 mass% or more, 60 mass% or more, 70 mass% or more, 80 mass% or more, or 90 mass% or more, with respect to the total protein in the adhesive.

The adhesive contains 20 mass% to 90 mass% of the total protein with respect to the total mass of the adhesive, and contains, for example, 30 mass% to 85 mass%, 40 mass% to 80 mass%, 40 mass% to 70 mass%, or 50 mass% to 90 mass% of the total protein with respect to the total mass of the adhesive. For example, the adhesive contains 20 mass% or more, 30 mass% or more, 35 mass% or more, 40 mass% or more, 50 mass% or more, 60 mass% or more, 70 mass% or more, 80 mass% or more, or 90 mass% or more of the total protein, with respect to the total mass of the adhesive, and contains, for example, 90 mass% or less, 80 mass% or less, 70 mass% or less, 60 mass% or less, or 50 mass% or less of the total protein, with respect to the total mass of the adhesive.

In the protein adhesive of one embodiment, the protein of 30 Da or more and 50 KDa or less may be a protein contained in a residue from a host cell, the host cell is a host cell producing a target substance, and the residue from the host cell is a cell residue obtained after the target substance is collected from the host cell. That is, the protein adhesive may contain the residue from the host cell, and preferably contains only the residue from the host cell as a protein of 30 Da or more and 50 KDa or less.

The protein adhesive of one embodiment is a protein adhesive containing a residue from a host cell, the host cell is a host cell producing a target substance, and the residue from the host cell is a cell residue after the target substance is collected from the host cell.

The residue from the host cell contains 20 mass% to 90 mass% of the total protein with respect to the total mass of a dried substance of the residue from the host cell, and contains, for example, 30 mass% to 85 mass%, 40 mass% to 80 mass%, 40 mass% to 70 mass%, or 50 mass% to 90 mass% of the total protein with respect to the total mass of the dried substance of the residue from the host cell. For example, the residue from the host cell contains 20 mass% or more, 30 mass% or more, 35 mass% or more, 40 mass% or more, 50 mass% or more, 60 mass% or more, 70 mass% or more, 80 mass% or more, or 90 mass% or more of the total protein, with respect to the total mass of the dried substance of the residue from the host cell, and contains, for example, 90 mass% or less, 80 mass% or less, 70 mass% or less, 60 mass% or less, or 50 mass% or less of the total protein, with respect to the total mass of the dried substance of the residue from the host cell. The total protein may include a recombinant protein remaining in a small amount, in addition to a membrane protein derived from a host cell, a ribosomal protein, a glycoprotein, and a protein derived from a host cell, such as a lipoprotein.

The form of the protein adhesive of the present embodiment is not particularly limited, and may be a dry powder, a solution, a granule, a pellet, or a film.

### (Target Substance)

The present invention provides effective utilization of a residue from a host cell producing a target substance. The "target substance" produced by the host cell is not particularly limited as long as it is a compound produced by a cell. The target substance may be an organic substance or an inorganic substance, may be a substance retained in a cell or a substance secreted extracellularly, or may be a substance produced by synthesis or a substance produced by degradation. Examples thereof include a nucleic acid, an amino acid, a sugar, a glycoprotein, a fatty acid, a vitamin, a peptide, an antibody, and a hormone. The target substance is preferably a nucleic acid, an amino acid, or a recombinant protein, and the recombinant protein may be soluble or insoluble.

### (Recombinant Protein)

The recombinant protein of the present embodiment may be a recombinant protein produced in a target protein production system or a recombinant protein required for producing a target substance in a host cell, and the type thereof is not particularly limited. A target protein may be, for example, a structural protein that constructs a biological structure, or may be a functional protein such as an enzyme, a hormone, or an antibody. In addition, the target protein may be a protein expressed in a host cell, or may be a protein extracellularly secreted from a host cell. Further, the recombinant protein may be soluble or insoluble. Examples of the functional protein include a protein having a catalytic action, such as an enzyme, a protein having a regulatory action, such as a hormone, a neurotransmitter, or a repressor, a protein having a biodefense action, such as an antibody or fibrin, and a protein involved in transport of a substance, such as hemoglobin, myoglobin, or albumin. The recombinant protein required for producing a target substance may be a structural protein or a functional protein, and examples thereof include enzymes acting in a host cell.

Examples of the structural protein include natural structural proteins such as fibroin that is naturally present, collagen, resilin, elastin, and keratin. As the fibroin that is naturally present, fibroin produced by insects or spiders is known. In the present embodiment, the structural protein preferably contains at least one selected from the group consisting of a natural spider silk protein and a polypeptide derived from a natural spider silk protein.

Examples of the fibroin produced by insects include silk proteins produced by silkworms such as Bombyx mori, Bombyx mandarina, Antheraea yamamai, Anteraea pernyi, Eriogyna pyretorum, Pilosamia Cynthia ricini, Samia cynthia, Caligura japonica, Antheraea mylitta, and Antheraea assama; and hornet silk proteins discharged by larvae of Vespa simillima xanthoptera.

The spider has up to 7 types of silk glands, and the respective silk glands produce fibroins (spider silk proteins) with different properties. The spider silk proteins are named, according to the organ of the source, a major ampullate spider protein (MaSp) having high toughness, a minor ampullate spider protein (MiSp) having high elongation, and a flagelliform (Flag), tubuliform, aggregate, aciniform, or pyriform spider silk protein.

More specific examples of the naturally-derived fibroin include fibroin whose sequence information is registered in NCBI GenBank. For example, sequences thereof may be confirmed by extracting sequences in which spidroin, ampullate, fibroin, "silk and polypeptide", or "silk and protein" is described as a keyword in DEFINITION among sequences containing INV as DIVISION among sequence information registered in NCBI GenBank, sequences in which a specific character string of products is described from CDS, or sequences in which a specific character string is described from SOURCE to TISSUE TYPE.

The structural protein may be a polypeptide derived from the natural structural protein, that is, a recombinant polypeptide. For example, recombinant fibroin is produced in several heterologous protein production systems. Methods for producing recombinant fibroin use transgenic goat, transgenic silkworm, or recombinant plants or mammalian cells (see Science, 2002, vol. 295, pp. 472-476).

The recombinant fibroin can be obtained by, for example, deleting one or a plurality of sequences encoding the (A)ₙ motif from the cloned genetic sequence of naturally-derived fibroin. Alternatively, recombinant fibroin can be obtained by, for example, designing an amino acid sequence corresponding to an amino acid sequence in which one or a plurality of (A)ₙ motifs have been deleted from the amino acid sequence of naturally-derived fibroin, and chemically synthesizing a nucleic acid encoding the designed amino acid sequence. In any case, in addition to the modification corresponding to deletion of the (A)ₙ motif from the amino acid sequence of naturally derived fibroin, modification of the amino acid sequence corresponding to substitution, deletion, insertion, and/or addition of one or a plurality of amino acid residues may be performed. The substitution, deletion, insertion, and/or addition of amino acid residues can be performed by a method known to those skilled in the art such as site-directed mutagenesis. Specifically, the modification may be performed in accordance with a method described in literatures such as Nucleic Acid Res. 10, 6487 (1982), and Methods in Enzymology, 100, 448 (1983).

A recombinant polypeptide of a major dragline silk protein can be represented, for example, as a protein containing a domain sequence represented by Formula 1: [(A)ₙ motif-REP]ₘ (in Formula 1, the (A)ₙ motif represents an amino acid sequence consisting of 4 to 20 amino acid residues and the number of alanine residues with respect to the total number of amino acid residues in the (A)ₙ motif is 80% or more, REP represents an amino acid sequence consisting of 10 to 200 amino acid residues, m represents an integer of 8 to 300, the plurality of (A)ₙ motifs may be the same or different amino acid sequences, and the plurality of REPs may be the same or different amino acid sequences).

Examples of the recombinant polypeptide of collagen include a protein containing a domain sequence represented by Formula 2: [REP2]ₒ (in Formula 2, o represents an integer of 5 to 300, REP2 represents an amino acid sequence consisting of Gly-X-Y, X and Y each represent an optional amino acid residue other than Gly, and a plurality of REP2s may be the same or different amino acid sequences).

Examples of the recombinant polypeptide of resilin include a protein containing a domain sequence represented by Formula 3: [REP3]ₚ (in Formula 3, p represents an integer of 4 to 300, REP3 represents an amino acid sequence consisting of Ser-J-J-Tyr-Gly-U-Pro, J represents any amino acid residue, and in particular, preferably is an amino acid residue selected from the group consisting of Asp, Ser, and Thr, U represents any amino acid residue, and in particular, preferably is an amino acid residue selected from the group consisting of Pro, Ala, Thr, and Ser, and a plurality of REP3s may be the same or different amino acid sequences).

Examples of the recombinant polypeptide of elastin include structural proteins having amino acid sequences of NCBI Genbank Accession Nos. AAC98395 (human), 147076 (sheep), NP786966 (cow), and the like.

Examples of the recombinant polypeptide of keratin include a type I keratin of *Capra hircus.*

Examples of the enzyme include polymerase and glutaminase, examples of the hormone include insulin and melatonin, and examples of the antibody include immunoglobulin G and immunoglobulin M.

For example, the recombinant protein can be expressed in a host cell by introducing a nucleic acid encoding the recombinant protein (also referred to as a "recombinant protein gene") into the host cell by a method described below.

### (Host Cell)

The "host cell" in the present invention refers to a host cell producing a target substance, and "producing a target substance" refers to having an ability to produce a target substance to an extent that the target substance can be collected from a cell or a medium when the cell is cultured in the medium. Preferably, it means that the cell is a genetically modified host cell and has an ability to produce a larger amount of a target substance than a wild type strain or an unmodified strain of the cell. The host cell is preferably a recombinant host cell, and is obtained, for example, by introducing a recombinant protein gene into a host cell.

The host cell may have an expression mechanism of a recombinant protein, and may be a recombinant host cell expressing a recombinant protein. The expression mechanism of a recombinant protein is a mechanism for selectively expressing a recombinant protein, and a well-known recombinant protein expression mechanism can be used. A large amount of a recombinant protein can be expressed by having the recombinant protein expression mechanism. A cell producing a target substance that has a recombinant protein expression mechanism can be obtained, for example, by introducing an expression vector having DNA encoding a recombinant protein into a cell.

The host cell of the present embodiment is a cell capable of expressing a recombinant protein that is an exogenous protein, and is obtained by introducing a recombinant protein gene into a host cell by a genetic engineering technique. In the present specification, the host cell refers to a recombinant cell recombined by a recombinant protein gene, but a cell before being recombined by a recombinant protein gene may also be referred to as a host cell unless it is clearly confused.

A method for producing a nucleic acid encoding the recombinant protein is not particularly limited. For example, in the case of the nucleic acid encoding modified fibroin, a desired nucleic acid can be produced by a method in which a gene encoding natural fibroin is amplified and cloned by a polymerase chain reaction (PCR) or the like, and the amplified and cloned gene is modified by a genetic engineering method, or a method for chemically synthesizing a nucleic acid. A method for chemically synthesizing a nucleic acid is not particularly limited and, for example, genes can be chemically synthesized by a method for linking, by PCR or the like, oligonucleotides that are automatically synthesized by AKTA oligopilot plus 10/100 (GE Healthcare Japan Ltd.) or the like, based on amino acid sequence information of proteins obtained from the NCBI web database and the like. In this case, in order to facilitate purification and/or confirmation of proteins, a nucleic acid encoding a protein consisting of an amino acid sequence obtained by adding an amino acid sequence consisting of a start codon and a His10 tag to the N-terminus of the above amino acid sequence may be synthesized.

The regulatory sequence is a sequence that controls the expression of a recombinant protein in a host cell (for example, a promoter, an enhancer, a ribosome binding sequence, and a transcription termination sequence), and can be appropriately selected depending on the type of host cell. As the promoter, an inducible promoter that functions in a host cell and can induce expression of a recombinant protein may be used. The inducible promoter is a promoter that can control transcription by presence of an inducer (expression inducer), absence of a repressor molecule, or physical factors such as increase or decrease in the temperature, osmotic pressure, pH value, or the like.

The type of expression vector such as a plasmid vector, a viral vector, a cosmid vector, a fosmid vector, or an artificial chromosome vector can be appropriately selected depending on the type of host cell. As the expression vector, an expression vector which can automatically replicate in a host cell or can be incorporated into a chromosome of a host cell and which contains a promoter at a position capable of transcribing the nucleic acid encoding the protein is suitably used.

The type of host cell used for genetic recombination is not particularly limited as long as it is used for genetic recombination, but any of prokaryotes and eukaryotes such as yeast, filamentous fungi, insect cells, animal cells, and plant cells can be suitably used. For example, the host cell may be selected from the group consisting of *E. coli,* yeast, a *Bacillus* microorganism, a *Corynebacterium* microorganism, a filamentous fungus, and an animal cell.

Examples of the host cell of the prokaryote include bacteria belonging to the genus *Escherichia,* the genus *Brevibacillus,* the genus *Serratia,* the genus *Bacillus,* the genus *Microbacterium,* the genus *Brevibacterium,* the genus *Corynebacterium,* and the genus *Pseudomonas.* An example of microorganisms belonging to the genus *Escherichia* includes *E. coli.* Examples of the microorganism belonging to the genus *Brevibacillus* include *Brevibacillus agri,* and the like. Examples of the microorganism belonging to the genus *Serratia* include *Serratia liquefacience,* and the like. Examples of the microorganism belonging to the genus *Bacillus* include *Bacillus subtilis,* and the like. Examples of the microorganism belonging to the genus *Microbacterium* include *Microbacterium ammoniaphilum,* and the like. Examples of the microorganism belonging to the genus *Brevibacterium* include *Brevibacterium divaricatum,* and the like. Examples of the microorganism belonging to the genus *Corynebacterium* include *Corynebacterium ammoniagenes,* and the like. Examples of the microorganism belonging to the genus *Pseudomonas* include *Pseudomonas putida,* and the like.

In a case where a prokaryote is used as the host cell, examples of a vector into which a nucleic acid encoding a protein is introduced include pBTrp2 (manufactured by Boehringer Ingelheim GmbH), pGEX (manufactured by Pharmacia), pUC18, pBluescriptII, pSupex, pET22b, pCold, pUB110, and pNCO2 (JP 2002-238569 A).

Examples of the eukaryotic host cells include yeast and a filamentous fungus (mold or the like). Examples of the yeast include yeasts belonging to the genus *Saccharomyces, Pichia,* and *Schizosaccharomyces.* Examples of the filamentous fungi include fungi belonging to the genus *Aspergillus, Penicillium,* and *Trichoderma.*

In a case where a eukaryote is used as the host cell, examples of a vector into which a nucleic acid encoding a recombinant protein is introduced include YEp13 (ATCC37115), and YEp24 (ATCC37051). As a method for introducing an expression vector into the foregoing host cell, any method can be used as long as it introduces DNA into the host cell. Examples thereof include a method using calcium ions [Proc. Natl. Acad. Sci. USA, 69, 2110 (1972)], an electroporation method, a spheroplast method, a protoplast method, a lithium acetate method, and a competent method.

As a method for expressing a nucleic acid in a host cell transformed with an expression vector, secretory production, fusion protein expression, and the like, in addition to direct expression, can be performed according to the method described in Molecular Cloning, 2nd edition.

The recombinant protein can be produced, for example, by culturing a host cell transformed with an expression vector in a culture medium, generating and accumulating the protein in the culture medium, and collecting the protein from the culture medium. A method for culturing the host cell in the culture medium can be performed according to a method commonly used for culturing a host cell.

In the case where the host cell is a prokaryote such as *E. coli* or a eukaryote such as yeast, any of a natural medium and a synthetic medium may be used as a culture medium as long as it contains a carbon source, a nitrogen source, inorganic salts, and the like which can be assimilated by the host cell and it is a culture medium capable of efficiently culturing the host cell.

As the carbon source, any carbon source that can be assimilated by the transformed microorganisms may be used, and it is possible to use, for example, carbohydrate such as glucose, fructose, sucrose, or molasses, starch, or starch hydrolyzates containing the carbohydrate, organic acid such as acetic acid or propionic acid, and alcohol such as ethanol or propanol. As the nitrogen source, for example, it is possible to use an ammonium salt of inorganic or organic acid such as ammonia, ammonium chloride, ammonium sulfate, ammonium acetate, or ammonium phosphate, other nitrogen-containing compounds, peptone, meat extract, yeast extract, corn steep liquor, casein hydrolyzate, soybean cake, soybean cake hydrolyzate, and various fermentative bacteria and digested products thereof. Examples of the inorganic salt that can be used include monopotassium phosphate, dipotassium phosphate, magnesium phosphate, magnesium sulfate, sodium chloride, ferrous sulfate, manganese sulfate, copper sulfate, and calcium carbonate.

Prokaryotes such as *Escherichia coli* or eukaryotes such as yeast can be cultured, for example, under aerobic conditions such as shaking culture or aeration agitation submerged culture. The culture temperature is, for example, 15 to 40°C. The culture time is usually 16 hours to 7 days. The pH of the culture medium during culture is preferably maintained at 3.0 to 9.0. The pH of the culture medium can be adjusted by using an inorganic acid, an organic acid, an alkali solution, urea, calcium carbonate, ammonia, or the like.

In addition, antibiotics such as ampicillin and tetracycline may be added to the culture medium during the culture, if necessary. When culturing microorganisms transformed with an expression vector using an inducible promoter as a promoter, an inducer may be added to the medium, if necessary. For example, in a case of culturing a microorganism transformed with an expression vector using a lac promoter, isopropyl-p-D-thiogalactopyranoside or the like may be added to the medium, and in a case of culturing a microorganism transformed with an expression vector using a trp promoter, indole acrylic acid or the like may be added to the culture medium.

Isolation and purification of the expressed recombinant protein can be performed by a commonly used method. For example, in the case where the protein is expressed in a dissolved state in host cells, the host cells are collected by centrifugation after completion of the culture, the collected cells are suspended in an aqueous buffer, and then the host cells are disrupted using an ultrasonicator, a French press, a Manton-Gaulin homogenizer, a Dyno-Mill, or the like to obtain a cell-free extract. A purified preparation can be obtained from the supernatant obtained by centrifuging the cell-free extract, according to a method commonly used for protein isolation and purification, that is, an enzyme treatment method, a solvent extraction method, a salting-out method using ammonium sulfate or the like, a desalting method, a precipitation method using an organic solvent, an anion exchange chromatography method using a resin such as diethylaminoethyl (DEAE)-sepharose or DIAION HPA-75 (manufactured by Mitsubishi Kasei Kogyo Kabushiki Kaisha), a cation exchange chromatography method using a resin such as S-sepharose FF (manufactured by Pharmacia Corporation), a hydrophobic chromatography method using a resin such as butyl sepharose and phenyl sepharose, a gel filtration method using a molecular sieve, an affinity chromatography method, a chromatofocusing method, an electrophoresis method such as isoelectric focusing phoresis and the like, alone or in combination thereof.

In addition, in the case where the protein is expressed by formation of an insoluble substance in cells, similarly, the host cells are collected, disrupted, and then centrifuged to collect the insoluble substance of the protein as a precipitated fraction. The collected insoluble substance of the protein can be solubilized with a protein modifier. After this operation, a purified preparation of the protein can be obtained by the same isolation and purification method as described above. In the case where the protein is secreted extracellularly, the protein can be collected from the culture supernatant. That is, a culture supernatant can be obtained by treating the culture by a method such as centrifugation, and a purified preparation can be obtained from the culture supernatant using the same isolation and purification method as described above.

### (Residue from Host Cell)

The residue from the host cell of the present embodiment is a cell residue obtained after the target substance (in a case where the target substance is a recombinant protein, the recombinant protein) is collected from the host cell. As described above, the method for collecting a recombinant protein includes separating a recombinant protein and a protein derived from a host cell so that a component derived from a general host cell, particularly, a protein derived from a host cell is not mixed as an impurity although the method for isolating and purifying the recombinant protein may vary depending on the state of the recombinant protein (whether it is insoluble). However, a cell residue remaining after the target substance is collected particularly contains a membrane protein derived from a host cell, a ribosomal protein, or the like, as a main component of the component derived from the host cell.

The membrane protein derived from a host cell is not particularly limited, and examples thereof include OmpA, OmpC, OmpF, OmpT, and LamB. A molecular weight of the membrane protein varies depending on the type of host cell, and for example, in a case of *E. coli* or the like, the membrane protein has a molecular weight of about 30 kDa or more and 50 kDa or less. The ribosomal protein has a molecular weight of less than about 30 kDa.

The residue from the host cell of one embodiment contains a protein derived from a host cell, and a main component thereof is a membrane protein derived from a host cell or a ribosomal protein. Although it depends on the type of host cell and the separation process, the residue from the host cell contains 20 mass% or more of a membrane protein derived from a host cell with respect to the total mass of a dried substance of the residue from the host cell, contains, for example, 30 mass% or more, 35 mass% or more, 40 mass% or more, or 50 mass% or more of a membrane protein derived from a host cell with respect to the total mass of the dried substance of the residue from the host cell, and contains, for example, 90 mass% or less, 80 mass% or less, or 70 mass% or less of a membrane protein derived from a host cell with respect to the total mass of the dried substance of the residue from the host cell. In addition, the residue from the host cell of one embodiment contains 20 mass% or more of a liposome protein derived from a host cell with respect to the total mass of a dried substance of the residue from the host cell, contains, for example, 30 mass% or more, 35 mass% or more, 40 mass% or more, or 50 mass% or more of a liposome protein derived from a host cell with respect to the total mass of the dried substance of the residue from the host cell, and contains, for example, 90 mass% or less, 80 mass% or less, or 70 mass% or less of a liposome protein derived from a host cell with respect to the total mass of the dried substance of the residue from the host cell.

A residue from a host cell of another embodiment contains a protein of 50 kDa or less derived from a host cell. Examples of the protein of 50 kDa or less derived from a host cell include a membrane protein derived from a host cell, a ribosomal protein, a glycoprotein, and a lipoprotein. The protein of 50 kDa or less is preferably contained in an amount of 50 mass% or more, for example, 60 mass% or more, 70 mass% or more, 80 mass% or more, or 90 mass% or more, with respect to the total mass of the dried substance of the residue from the host cell. In addition, the protein of 50 kDa or less is preferably contained in an amount of 40 mass% or more with respect to the total protein in the residue from the host cell, and is contained in an amount of, for example, 50 mass% or more, 60 mass% or more, 70 mass% or more, 80 mass% or more, or 90 mass% or more, with respect to the total protein in the residue from the host cell.

A residue from a host cell of still another embodiment may contain a protein of 30 kDa or more and 50 kDa or less derived from a host cell, and examples of the protein of 30 kDa or more and 50 kDa or less include a membrane protein. The protein of 30 kDa or more and 50 kDa or less is preferably contained in an amount of 20 mass% or more with respect to the total mass of the dried substance of the residue from the host cell, is contained in an amount of, for example, 30 mass% or more, 35 mass% or more, 40 mass% or more, or 50 mass% or more, with respect to the total mass of the dried substance of the residue from the host cell, and is contained in an amount of, for example, 90 mass% or less, 80 mass% or less, 70 mass% or less, 60 mass% or less, or 50 mass% or less, with respect to the total mass of the dried substance of the residue from the host cell. The protein of 30 kDa or more and 50 kDa or less is preferably contained in an amount of 40 mass% or more with respect to the total protein in the residue from the host cell, and is contained in an amount of, for example, 50 mass% or more, 60 mass% or more, 70 mass% or more, 80 mass% or more, or 90 mass% or more, with respect to the total protein in the residue from the host cell.

A residue from a host cell of another embodiment contains a protein of less than 30 kDa derived from a host cell, and examples of the protein of less than 30 kDa include a ribosomal protein. The protein of less than 30 kDa is contained in an amount of 5 mass% or more, for example, 10 mass% or more, 20 mass% or more, 30 mass% or more, or 40 mass% or more, with respect to the total mass of the dried substance of the residue from the host cell, and is contained in an amount of, for example, 90 mass% or less, 80 mass% or less, 70 mass% or less, 60 mass% or less, or 50 mass% or less, with respect to the total mass of the dried substance of the residue from the host cell. In addition, the protein of less than 30 kDa is preferably contained in an amount of 40 mass% or more with respect to the total protein in the residue from the host cell, and is contained in an amount of, for example, 50 mass% or more, 60 mass% or more, 70 mass% or more, 80 mass% or more, or 90 mass% or more, with respect to the total protein in the residue from the host cell.

The residue from the host cell contains 20 mass% to 90 mass% of the total protein with respect to the total mass of a dried substance of the residue from the host cell, and contains, for example, 30 mass% to 85 mass%, 40 mass% to 80 mass%, 40 mass% to 70 mass%, or 50 mass% to 90 mass% of the total protein with respect to the total mass of the dried substance of the residue from the host cell. The total protein may include a recombinant protein remaining in a small amount, in addition to a membrane protein derived from a host cell, a ribosomal protein, a glycoprotein, and a protein derived from a host cell, such as a lipoprotein.

The residue from the host cell contains 10 mass% or less or 5 mass% or less of a recombinant protein with respect to the total mass of the dried substance of the residue from the host cell, and contains, for example, 3 mass% or less, 2 mass% or less, 1 mass% or less, or 0.5 mass% or less of a recombinant protein with respect to the total mass of the dried substance of the residue from the host cell. The residue from the host cell contains more than 0 mass% of a recombinant protein, and a content thereof may be an amount that is below a limit of detection.

The residue from the host cell may contain a component derived from various cells in addition to a protein. For example, the residue from the host cell may contain a lipid derived from a host cell, sugars, salts, and/or a nucleic acid. As the lipid, a phospholipid derived from a cell membrane may be contained as a main component, and in addition, a saturated fatty acid and an unsaturated fatty acid may also be contained, and a lipoprotein may also be detected as a lipid by a lipid measurement method. A phospholipid profile in the cell membrane of *E. coli* is mainly three types: about 0 to 60% of phosphatidylethanolamine (PE), about 0 to 30% of phosphatidylglycerol (PG), and about 0 to 17% of cardiolipin (CL). A chemical structure of the lipid contains a plasticizer component called glycerin. In WO/2017/047504 A, when a protein resin molded body is produced, a content of water is controlled to a certain amount, and the protein resin molded body acts as a plasticizer. Therefore, regarding a content of the lipid, it is highly likely that the cell membrane phospholipids (PE, PG, and CL) of the residue from the host cell function as the same plasticizer and affect a molding temperature of a molded body containing the residue from the host cell. The sugars may include glucose, fructose, ribose, glyceraldehyde, and the like. The nucleic acid may include deoxyribonucleic acid and ribonucleic acid. The residue from the host cell may contain, for example, 5 mass% to 20 mass% of a lipid, 0.1 mass% to 5 mass% of sugars, 0.1 mass% to 5 mass% of a nucleic acid, and 0.1 mass% to 5 mass% of salts. Nucleic acids and sugars derived from a residue from a host cell other than a protein may affect colorability of the molded body by heating or the like. As a principle of coloring, a Maillard reaction and the like can be considered.

### (Method for Producing Residue from Host Cell)

A method for producing a host cell residual molded body includes disrupting a host cell producing a target substance, separating the target substance and the residue from the host cell, and collecting the residue from the host cell. In a case where the host cell is a host cell expressing a recombinant protein, the method includes disrupting the host cell expressing a recombinant protein, separating the recombinant protein and the residue from the host cell, and collecting the residue from the host cell.

The production of the host cell expressing a recombinant protein is as described above. After completion of host cell culture for expressing a recombinant protein, the host cells are collected by centrifugation or the like, suspended in an aqueous buffer, and then disrupted. The disruption method is not particularly limited, examples thereof include an ultrasonicator, a French press, a Manton-Gaulin homogenizer, and a Dyno-Mill, and for example, a highpressure homogenizer may be used.

The method for separating the recombinant protein and the residue from the host cell in the resulting disrupted product varies depending on properties of the recombinant protein. In a case where the recombinant protein is expressed in a dissolved state in the host cell, a cell-free extract obtained after disrupting the host cell is centrifuged to separate the extract into a supernatant fraction containing a recombinant protein and a precipitated fraction containing a residue from a host cell. On the other hand, in a case where the recombinant protein is expressed with formation of an insoluble substance in a host cell, similarly, the host cell is collected, disrupted, and centrifuged to separate the insoluble substance of the recombinant protein into a supernatant fraction containing an insoluble substance of a recombinant protein and a precipitated fraction containing a residue from a host cell.

The residue from the host cell is collected as the recombinant protein and the supernatant fraction or the precipitated fraction by centrifugation. In one embodiment, the residue from the host cell is separated from the recombinant protein in the precipitated fraction as a supernatant fraction by centrifugation. In this case, the recombinant protein is insoluble. The residue from the host cell, which is the obtained supernatant fraction, may be precipitated by heat treatment, acid aggregation, or ethanol aggregation, and may be collected as a precipitated fraction. In addition, the residue from the host cell collected as a precipitated fraction is appropriately washed. The collected residue from the host cell may be further purified before molding. The purification can be performed by washing with alkali or acid. Furthermore, from the viewpoint of preservation, the collected residue from the host cell may be a freeze-dried powder.

In another embodiment, the residue from the host cell is separated from the recombinant protein in the supernatant fraction as a precipitated fraction by centrifugation. In this case, the recombinant protein is soluble. The precipitated fraction may be used as it is, or the precipitated fraction may be washed, collected as a washed supernatant, and then precipitated again. Such a collection step may be, for example, a step of disrupting a host cell expressing a recombinant protein, collecting a residue from the host cell separated from the recombinant protein as a precipitated fraction, washing the precipitated fraction with an aqueous solution, and collecting the residue from the host cell as a washed supernatant. The separation of the recombinant protein and the residue from the host cell may be performed, for example, by centrifugation. When the obtained precipitated fraction is washed, the precipitated fraction may be washed with water or an aqueous solution, and the aqueous solution may be, for example, an aqueous solution containing a surfactant. Examples of the surfactant include a cationic surfactant, an anionic surfactant, and a neutral surfactant. The surfactant is preferably an anionic surfactant. Examples of the anionic surfactant include a carboxylic acid type, a sulfonic acid type, a sulfuric acid ester type, and a phosphoric acid ester type, and examples of the sulfuric acid ester type surfactant include sodium lauryl sulfate (SDS), an alkyl sulfate ester salt (AS), and a polyoxyethylene alkyl sulfate ester salt (AES). The sulfuric acid ester type is preferably sodium lauryl sulfate (SDS). In the washing by the surfactant, it is preferable to use a surfactant that affects a content of components other than the protein contained in the residue from the host cell, for example, lipids, and can partially contain the lipids in the washed supernatant. After collecting the residue from the host cell as a washed supernatant, the residue from the host cell may be aggregated by, for example, heat treatment, acid aggregation, or ethanol aggregation, and then, the residue from the host cell may be collected as a precipitated fraction.

The collected or purified residue from the host cell may be, for example, a dry powder, a solution, a granule, a pellet, a film, or the like. Examples of the drying method include freeze drying, freeze vacuum drying, and hot-air drying. The freeze drying can be performed using, for example, a freeze dryer FDU-1200 (EYELA TOKYO RIKAKIKAI CO., LTD.).

### (Functional Additive)

The adhesive may also contain a functional additive in addition to the protein. The functional additive is a material for adding a function to the adhesive, and examples of the function include a strength additive for adding strength (in particular, bending strength), an absorber for adding water retainability and water absorbency, and a deodorant for adding a deodorant effect. Specifically, the functional additive may be, for example, cellulose such as a wood chip, may be charcoal, activated carbon, a porous body, or the like, and the porous body may be an inorganic porous body such as silica, ceramic (waste material), calcium carbonate (seashell), or porous concrete. The functional additive is preferably a strength additive, and a heat resistant temperature of the strength additive may be 100°C or higher, and is preferably, for example, 110°C or higher, 120°C or higher, or 130°C or higher. The functional additive is 5 mass% or more, preferably 10 mass% or more, 40 mass% or more, or less than 50 mass%, with respect to the total mass of the adhesive.

### (Object to be Adhered)

The adhesive of the present invention can be used for adhering various objects (objects to be adhered). Examples of the object to be adhered include objects formed of materials such as a metal material, a cellulose material, a protein material, a resin material, a mineral and inorganic material, and a fiber material. Examples of the metal material include iron, copper, and alloys. Examples of the cellulose material include a wood piece, a paper, a pulp, and a cellulose fiber. Examples of the protein material include fibroin and spider silk protein. Examples of the resin material include a urea resin, a melamine resin, a phenolic resin, a polyethylene resin, ABS, and polylactic acid. Examples of the porous body and plaster include silica, calcium carbonate, and diatomite. Examples of the fiber material include a fiber, a yarn, and a fabric.

In the present specification, an object obtained by bonding (joining) two or more objects to be adhered by the adhesive of the present invention is referred to as a joined body. In the joined body, two or more objects to be adhered may be formed of the same material or different materials. In the joined body, two or more objects to be adhered are adhered by the adhesive, and the adhesive is in contact with at least a part of the objects to be adhered, or two or more objects to be adhered are adhered to each other so as to wrap at least a part around the objects to be adhered.

### [Joined Body]

The joined body of one embodiment is a joined body including a first object, a second object, and an adhesive layer interposed between the first object and the second object, the first object and the second object are joined by the adhesive layer, and the adhesive layer is an adhesive layer formed of a protein adhesive containing a protein of 50 KDa or less.

The first object and the second object are not particularly limited, and examples of a material thereof include a metal material, a cellulose material, a protein material, a resin material, a mineral and inorganic material, and a fiber material. Examples of the metal material include iron, copper, and alloys. Examples of the cellulose material include a wood piece, a paper, a pulp, and a cellulose fiber. Examples of the protein material include fibroin and spider silk protein. Examples of the resin material include a urea resin, a melamine resin, a phenolic resin, a polyethylene resin, ABS, and polylactic acid. Examples of the porous body and plaster include silica, calcium carbonate, and diatomite. Examples of the fiber material include a fiber, a yarn, and a fabric. The first object and the second object may be objects formed of the same material or objects formed of different materials.

The adhesive is as described above, and the adhesive layer is a layer formed by resinizing the adhesive by, for example, drying or heating and pressurizing treatment. The shape of the adhesive layer is not particularly limited, and a thickness thereof is not particularly limited as long as the function of the adhesive layer can be performed, and may be, for example, 50 µm to 1,000 µm.

The adhesive may contain a functional additive, and in the case, the adhesive layer contains a functional additive at least on a surface and/or an inner side thereof. The adhesive layer joins the first object and the second object with the protein and/or the functional additive of the adhesive.

The adhesive layer contains 20 mass% to 90 mass% of the total protein with respect to the total mass of the adhesive layer, and contains, for example, 30 mass% to 85 mass%, 40 mass% to 80 mass%, 40 mass% to 70 mass%, or 50 mass% to 90 mass% of the total protein with respect to the total mass of the adhesive layer.

The joined body of another embodiment is a joined body including a plurality of objects to be adhered, and an adhesive layer formed so as to wrap at least a part between the plurality of objects to be adhered and/or around the plurality of objects to be adhered, and the adhesive layer is an adhesive layer formed of a protein adhesive containing a protein of 50 KDa or less. The objects to be adhered may be the first object and the second object described above, and the plurality of objects may be the same or different. The adhesive may contain a functional additive, and in the case, the joined body contains a functional additive at least on a surface and/or an inner side thereof.

### [Method for Producing Joined Body]

The method for producing a joined body of one embodiment is a method for producing a joined body including a first object, a second object, and an adhesive layer interposed between the first object and the second object, in which the first object and the second object are joined by the adhesive layer, the adhesive layer is an adhesive layer formed of a protein adhesive containing a protein of 50 KDa or less, and the production method includes joining the first object and the second object by sequentially laminating the first object, the adhesive, and the second object and forming the adhesive on the adhesive layer by drying and heating and pressurizing treatment. The lamination method varies depending on the form of the adhesive, and in a case of a solid such as a dry powder, a granule, a pellet, or a film, the adhesive may be directly laminated on the first object or the second object to form a layer. In addition, in a case where the adhesive is a liquid such as a solution, the adhesive may be laminated by being applied to the first object or the second object to form a coating film.

The method for producing a joined body of still another embodiment is a method for producing a joined body including a plurality of objects to be adhered and an adhesive layer formed so as to wrap at least a part between the plurality of objects to be adhered and/or around the plurality of objects to be adhered, in which the adhesive layer is an adhesive layer formed of a protein adhesive containing a protein of 50 KDa or less, and the production method includes joining the plurality of objects to be adhered by mixing the plurality of objects to be adhered and the adhesive and forming the adhesive on the adhesive layer by drying or heating and pressurizing treatment. The mixing method is not particularly limited, those skilled in the art can appropriately select the mixing method depending on the forms of the adhesive and the object to be adhered, and mixing may be performed, for example, using a stirrer. Examples of the stirrer include a V-type mixer.

In a case where the adhesive is a liquid coating film, the joined body can be formed by drying. A drying temperature may be, for example, 20 to 60°C. A drying time may be, for example, 12 to 48 hours. The heating and pressurizing may be performed by molding, and a heating temperature is not particularly limited, may be, for example, 100°C or higher, 110°C or higher, 120°C or higher, or 130°C or higher, may be 200°C or lower, 170°C or lower, or 150°C or lower, and is preferably, for example, 110°C to 170°C or 130°C to 150°C. The pressure is not particularly limited as long as it is 10 Pa to 100 Pa, and may be, for example, 20 Pa to 80 Pa or 30 Pa to 50 Pa.

### [Ground Improvement Injection Material]

The adhesive of one embodiment can be used as a ground improvement injection material. The ground improvement injection material is a material for injecting into weak ground such as sand ground to enhance shear strength of the ground. Since the adhesive of the present invention is a biodegradable adhesive, the injection material is gradually decomposed over time in a soil strengthened by the ground improvement injection material of the present invention containing the adhesive of the present invention. Therefore, the soil does not contain unnecessary components and the soil generated during excavation of the ground can be reused as it is.

The ground improvement injection material of one embodiment may contain a liquid such as water for facilitating injection, other biodegradable polymers, and the like, in addition to the residue from the host cell as an adhesive. The injection method may be any general infiltration solidification treatment method, and the injection amount can be arbitrarily selected by those skilled in the art depending on the desired ground strength. Examples of the ground where the ground improvement injection material is used include, but are not limited to, sand, a slope of a mountain, and soft ground for a general house or a large-sized building.

### [Mortar Analogue and Concrete Analogue]

The adhesive of one embodiment is used as a substitute for mortar used in construction (in the present specification, referred to as a "mortar analogue"). In general mortar, cement and a fine aggregate such as sand are mixed and kneaded. Cement refers to a powder that is hydrated, polymerized, and cured by water, a liquid agent, or the like, and in a broad sense, refers to asphalt, a glue, a resin, diatomite, lime, or all adhesives obtained by combining these materials. The mortar analogue of one embodiment contains a residue from a host cell as an adhesive, may further contain an alkaline substance such as calcium hydroxide, and a general cement component such as aluminum oxide, sodium hydroxide, or diatomite, and may or may not contain a fine aggregate such as sand. The mortar analogue can be obtained by mixing a residue from a host cell, other components, and water in appropriate amounts and kneading them.

A mixture of the mortar analogue with a fine aggregate such as sand and a coarse aggregate such as a pebble (gravel) is used as a substitute for concrete (in the present specification, referred to as a "concrete analogue"). The concrete analogue of one embodiment contains a fine aggregate such as sand and a coarse aggregate such as a pebble (gravel) in addition to the residue from the host cell as an adhesive. In addition, the concrete analogue of another embodiment further contains a fine aggregate such as sand and a coarse aggregate such as a pebble (gravel) in addition to the mortar analogue. Here, a diameter of the fine aggregate is 5 mm or less, and a diameter of the coarse aggregate exceeds 5 mm. The mortar analogue can be obtained by kneading 0.5 to 3 parts by weight of the fine aggregate and 0.5 to 5 parts by weight of the coarse aggregate with respect to 1 part by weight of the concrete analogue.

### Examples

Hereinafter, the present invention will be described in more detail with reference to Examples, but the present invention is not limited to these Examples as long as it does not deviate from the technical idea of the present invention.

### (1) Production of Target Structural Protein Expressing Strain

A base sequence and an amino sequence of fibroin (GenBank Accession No: P46804.1, GI: 1174415) derived from *Nephila clavipes* were acquired from the web database GenBank, substitution, insertion, and deletion of amino acid residues for improving productivity were performed, and an amino acid sequence (tag sequence and hinge sequence) represented by SEQ ID NO: 2 was further added to the N-terminus, thereby designing recombinant fibroin (PRT799) having an amino acid sequence represented by SEQ ID NO: 1 as an insoluble protein. Similarly, substitution, insertion, and deletion of amino acid residues for improving productivity were performed, and an amino acid sequence (tag sequence and hinge sequence) represented by SEQ ID NO: 2 was further added to the N-terminus, thereby designing recombinant fibroin (hereinafter, referred to as PRT643) having an amino acid sequence represented by SEQ ID NO: 3 as an insoluble protein. Similarly, substitution, insertion, and deletion of amino acid residues for improving productivity were performed, and an amino acid sequence (tag sequence and hinge sequence) represented by SEQ ID NO: 2 was further added to the N-terminus, thereby designing recombinant fibroin γ (hereinafter, referred to as PRT662) having an amino acid sequence represented by SEQ ID NO: 4.

Next, genes encoding PRT643, PRT799, and PRT662 each were synthesized. As a result, a gene in which an NdeI site was added to the immediate upstream of the 5'-terminus of the gene and an EcoRI site was added to the immediate downstream of the 3'-terminus of the gene was obtained. The gene was cloned into a cloning vector (pUC118), treated with restriction enzymes NdeI and EcoRI, and recombined into a protein expression vector pET-22b(+).

### (2) Expression of Target Structural Protein

*E. coli* BLR (DE3) was transformed with pET22b(+) expression vectors each containing genes encoding PRT643, PRT799, and PRT662 obtained as described above. The transformed *E. coli* was cultured in 2 mL of an LB medium containing ampicillin for 15 hours, and then the same culture solution was added to 100 mL of a seed culture medium shown in Table 1 so that the OD₆₀₀ was 0.005. The temperature of the culture solution was maintained at 30°C, and culture was further performed in a flask until OD₆₀₀ reached 5 for about 15 hours to obtain a seed culture solution.

**[Table 1]**

| Reagent | Concentration (g/L) |
|---|---|
| Glucose | 5.0 g/L |
| KH₂PO₄ | 4.0 g/L |
| K₂HPO₄ | 9.3 g/L |
| Yeast extract | 6.0 g/L |
| Ampicillin | 0.1 g/L |

The obtained seed culture solution was added to a jar fermenter to which a 500 mL production medium shown in Table 2 was added so that OD₆₀₀ was 0.05. The temperature of the culture solution was maintained at 37°C, the pH was controlled to be constant at 6.9, and culture was performed so that a concentration of oxygen dissolved in the culture solution was maintained at 20% of a saturation concentration of dissolved oxygen. ADEKA NOL LG-295S (manufactured by ADEKA Corporation) was used as a defoaming agent.

**[Table 2]**

| Reagent | Concentration (g/L) |
|---|---|
| Glucose | 12.0 g/L |
| KH₂PO₄ | 9.0 g/L |
| MgSO₄·7H₂O | 2.4 g/L |
| Yeast extract | 15.0 g/L |
| FeSO₄·7H₂O | 0.04 g/L |
| MnSO₄·5H₂O | 0.04 g/L |
| CaCl₂·2H₂O | 0.04 g/L |
| LG-295S (Defoaming agent) | 0.1 mL/L |

Immediately after glucose in the production medium was completely consumed, a feed solution (glucose 455 g/1 L, yeast extract 120 g/1 L) was added at a rate of 1 mL/min. The culture was performed while maintaining the culture solution temperature at 37°C and constantly controlling the pH to 6.9. Further, the dissolved oxygen concentration in the culture solution was maintained at 20% of the dissolved oxygen saturation concentration, and the culture was performed for 20 hours. Thereafter, a 1 M isopropyl-β-thiogalactopyranoside (IPTG) aqueous solution was added to the culture solution so that the final concentration was 1 mM to induce expression of the target protein. The culture solution was centrifuged 20 hours after addition of IPTG, and bacterial cells were collected. SDS-PAGE was performed using bacterial cells prepared from the culture liquids before and after the addition of IPTG, and expression of the target protein was confirmed by appearance of a band of the size of the target protein depending on the addition of IPTG.

### (3) Purification of Structural Protein

The bacterial cells collected 2 hours after the addition of IPTG were washed with 20 mM Tris-HCl buffer (pH 7.4). The washed bacterial cells were suspended in a 20 mM Tris-HCl buffer (pH 7.4) containing about 1 mM phenylmethylsulfonyl fluoride (PMSF), and the bacterial cells were repeatedly disrupted using a high-pressure homogenizer (manufactured by GEA Niro Soavi Technologies). The disrupted cells were centrifuged (11,000 g, 10 minutes, room temperature) with a centrifuge ("Model 7000" manufactured by Kubota Corporation) to obtain a precipitate. The obtained precipitate was washed with a 20 mM Tris-HCl buffer (pH 7.4) or 3 w/v% SDS as a surfactant until the purity of the precipitate became high. The precipitate after washing was suspended in a 8 M guanidine buffer (8 M guanidine hydrochloride, 10 mM sodium dihydrogen phosphate, 20 mM NaCl, 1 mM Tris-HCl, pH 7.0) so that the concentration of the precipitate was 100 mg/mL, and dissolved by stirring with a stirrer at 60°C for 30 minutes. After dissolution, dialysis was performed with water using a dialysis tube (cellulose tube 36/32, manufactured by Sanko Junyaku Co., Ltd.). A white aggregated protein obtained after dialysis was collected by centrifugation, and water was removed in a freeze dryer to collect a freeze-dried powder.

### (4) Re-purification of Residue from Host Cell Expressing Target Structural Protein

### (a) Residue from Host Cell Obtained from Washed Waste Liquid

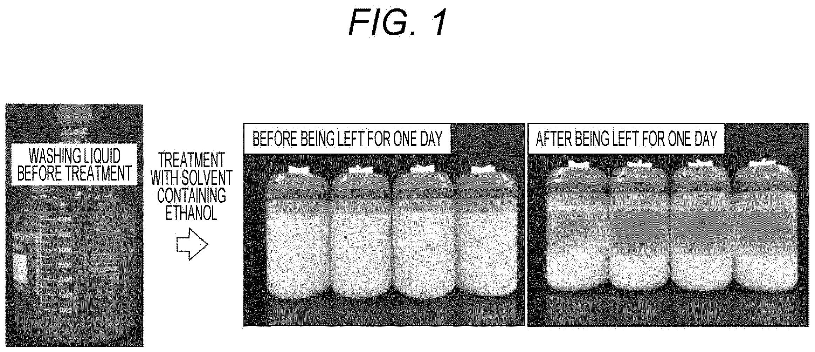

In the *E. coli* transformed with the gene encoding PRT643, when the disrupted cell precipitate (precipitate containing PRT643) was washed, a 3% surfactant was used. The washed cells were centrifuged (11,000 g, 10 minutes, room temperature) with a centrifuge to obtain a waste centrifugal supernatant. This washed waste centrifugal supernatant was inactivated at 80°C for 2 hours, the same volume of CLYNSOLVE P-7 (Japan Alcohol Trading Co., Ltd.) was further added, and the resulting mixture was left for one day to obtain a precipitate containing a protein (Fig. 1). Thereafter, 11,000 g of the mixture was centrifuged at room temperature for 10 minutes using a centrifuge to collect a precipitate containing an aggregated protein. Next, a washing step of washing the precipitate using ion-exchanged water and collecting a precipitate by centrifugation was repeated three times, and then moisture was removed with a freeze dryer, thereby obtaining a freeze-dried powder of the residues from the host cells (PRT643) of Example 1.

### (b) Residue from Host Cell Obtained from Centrifugal Supernatant of Cell Disruption Liquid

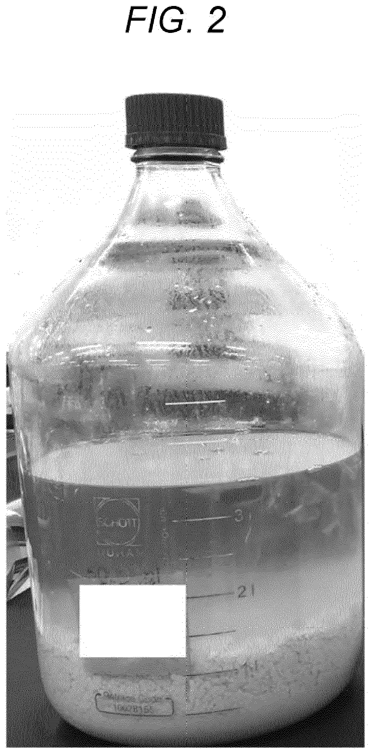

In the host cells recombined with PRT799, the cells were disrupted with the high-pressure homogenizer ("Panda Plus 2000", manufactured by GEA Niro Saovi Technologies), and 11,000 g of the disrupted cells were centrifuged at room temperature for 10 minutes using a centrifuge ("Model 7000", manufactured by Kubota Corporation) so that the target protein was precipitated, thereby collecting a centrifugal supernatant containing the residues from the host cells. The obtained centrifugal supernatant was inactivated at 80°C for 2 hours and the residues from the host cells were precipitated as a solid (Fig. 2). 11,000 g of the solid was collected by centrifugation at room temperature for 10 minutes, the collected solid was re-suspended in ion-exchanged water and neutralized using 5N sodium hydroxide so that the pH was around 7, and stirring was performed with a stirrer at room temperature for 2 hours. Thereafter, centrifugation was performed, the solid was re-suspended in ion-exchanged water, the pH was adjusted to 3.5 using 3 M citric acid, the protein in the solid was aggregated, and centrifugation was performed at room temperature and 11,000 g for 10 minutes using a centrifuge to collect a precipitate containing an aggregated protein. Next, a washing step of washing the precipitate using ion-exchanged water and collecting a precipitate by centrifugation was repeated three times, and then moisture was removed with a freeze dryer, thereby obtaining a freeze-dried powder of the residues from the host cells (PRT799) of Example 2. The same operation was carried out for the host cells recombined with the PRT662 to obtain a freeze-dried powder of the residues from the host cells of Example 3 (PRT662).

### (5) Qualitative and Quantitative Analysis of Residue from Host Cell

A concentration of the protein in the freeze-dried powder of the obtained residues from the host cells of each of Examples 1 to 3 was measured by a BCA method. For the measurement of the protein by the BCA method, Pierce (registered trademark) BCA Protein Assay Kit manufactured by Takara Bio Inc. was used. As a result of the measurement, the freeze-dried powder of the residues from the host cells of Example 1 contained about 61.5 ± 1.5 mass% of a protein, the freeze-dried powder of the residues from the host cells of Example 2 contained about 81.5 ± 3.7 mass% of a protein, and the freeze-dried powder of the residues from the host cells of Example 3 contained about 57.2 ± 5.0 mass% of a protein.

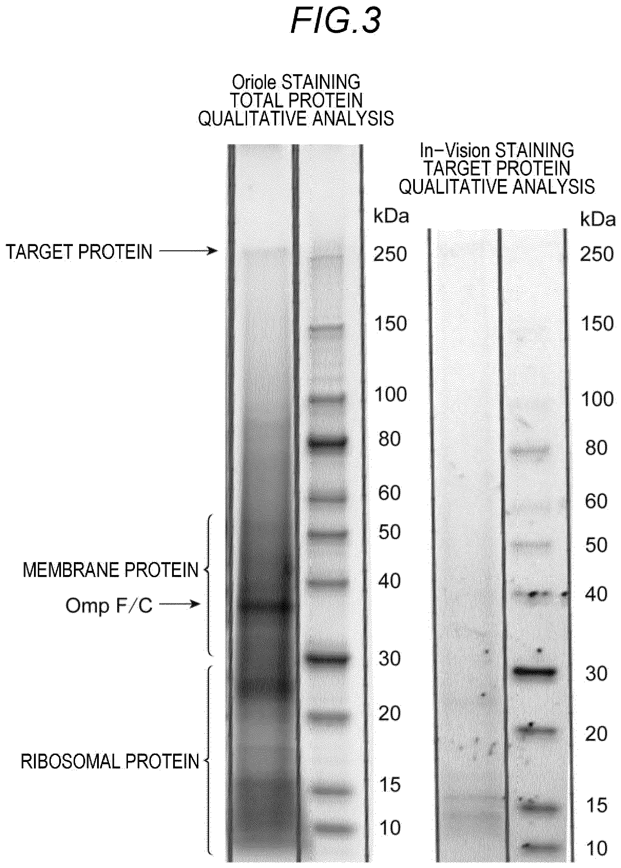

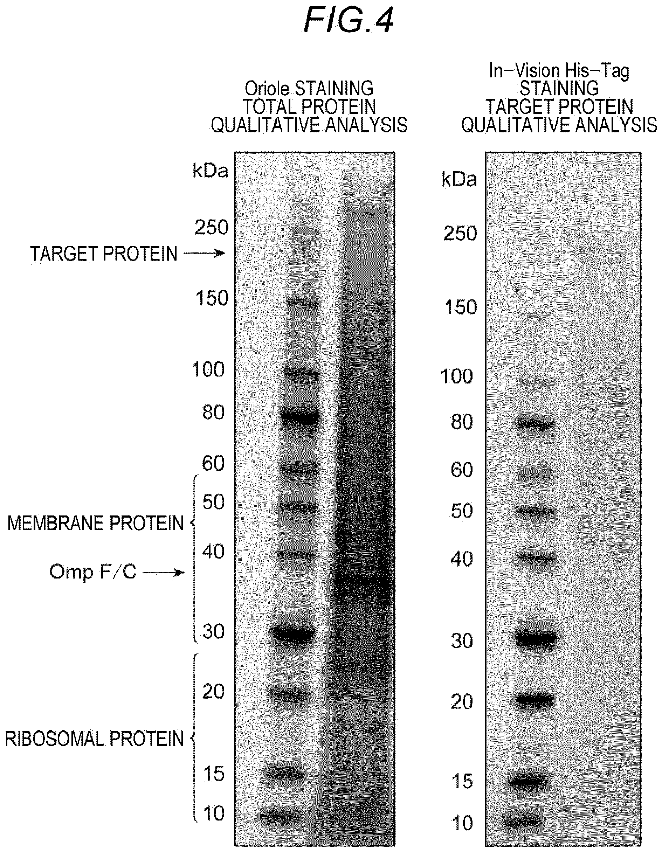

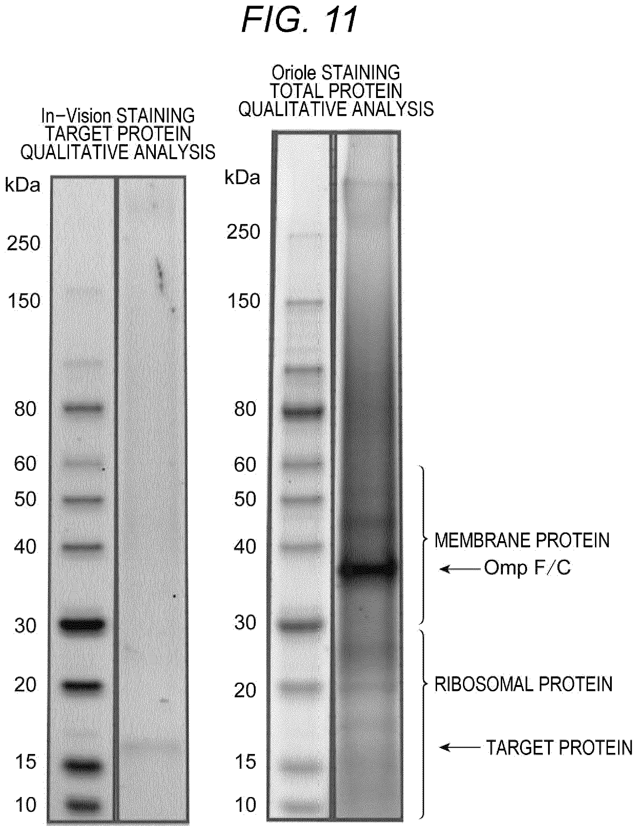

Similarly, SDS-PAGE electrophoresis was performed on the freeze-dried powder of each of Examples 1 to 3. The presence of proteins was confirmed by Oriole staining, image analysis was performed using an analysis software Image Lab (Bio-RAD Laboratories Inc.), and it was confirmed that the main band was a protein of about 39 kDa (Fig. 3: Example 1, Fig. 4: Example 2, Fig. 11: Example 3). According to the literature (for example, Meuskens, I., et al., A new strain collection for improved expression of outer membrane proteins. Frontiers in cellular and infection microbiology, 7,464 (2017)), the protein of about 39 kDa which is the main component of the residue from the host cell is presumed to be a membrane protein having a molecular weight of about 39 kDa such as outer membrane protein F (OmpF) or outer membrane protein C (OmpC). As other possible membrane proteins, LamB (< 49 kDa), OmpA (< 35 kDa), and the like are also presumed. On the other hand, a protein having a molecular weight of about 4 to 30 kDa, which is another component of the residue from the host cell, is presumed to be a ribosomal protein of the host cell.

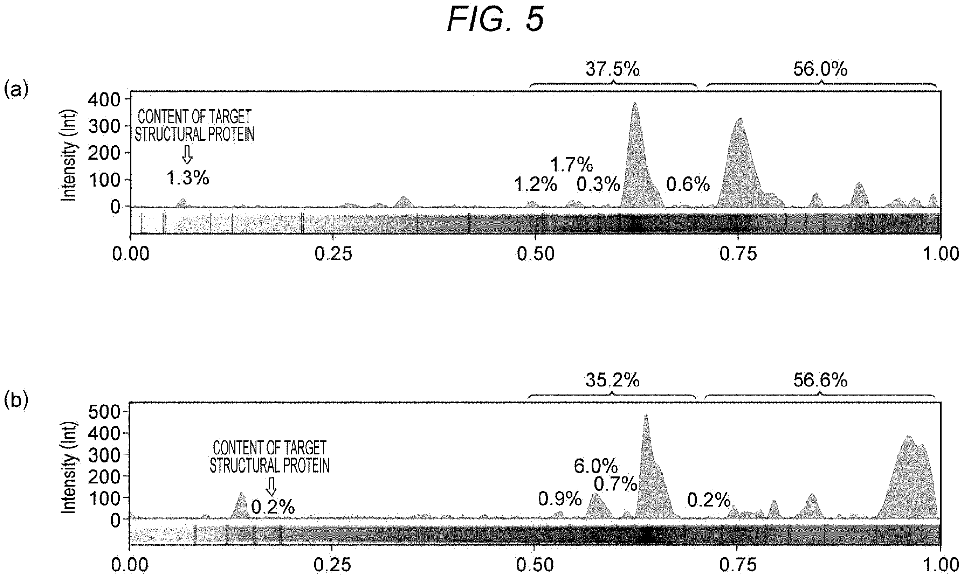

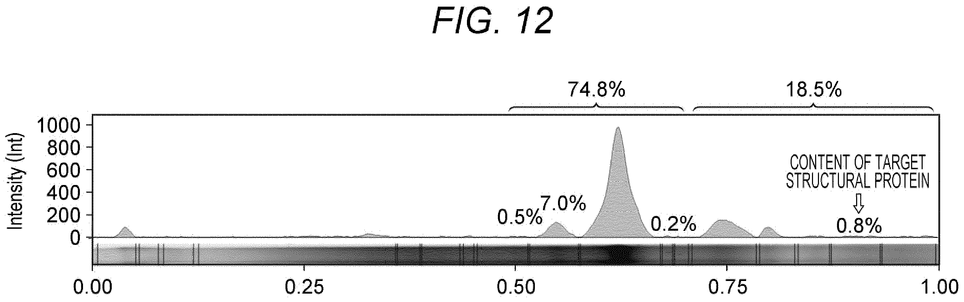

In order to confirm the composition and distribution of the proteins contained in the residues from the host cells of Examples 1 to 3, the molecular weight distribution was analyzed using an analysis software Image Lab. The results are illustrated in Fig. 5. (a) of Fig. 5, (b) of Fig. 5, and Fig. 12 illustrate the results of the molecular weight distribution percentage and the emission intensity of the residues from the host cells of Example 1, Example 2, and Example 3, respectively. It was confirmed from Fig. 5 that in Example 1, the protein (OmpF/OmpC) of about 39 kDa accounted for about 38 mass% of the total protein in the residue from the host cell, and on the other hand, the protein (ribosomal protein) having a molecular weight of about 4 to 30 kDa was about 56 mass% of the total protein in the residue from the host cell, and the target protein was 2 mass% or less of the total protein in the residue from the host cell. It was confirmed that in Example 2, the protein (OmpF/OmpC) of about 39 kDa accounted for about 35 mass% of the total protein in the residue from the host cell, and on the other hand, the protein (ribosomal protein) having a molecular weight of about 4 to 30 kDa was about 57 mass% of the total protein in the residue from the host cell, and the target protein was 1 mass% or less of the total protein in the residue from the host cell. It was confirmed from Fig. 12 that in Example 3, the protein (OmpF/OmpC) of about 39 kDa accounted for about 75 mass% of the total protein in the residue from the host cell, and on the other hand, the protein (ribosomal protein) having a molecular weight of about 4 to 30 kDa was about 19 mass% of the total protein in the residue from the host cell, and the target protein was 1 mass% or less of the total protein in the residue from the host cell.

The compositions of the freeze-dried powders of Examples 1 and 2 of the residues from the host cells measured above (the protein adhesives of Examples 1 and 2) are summarized in Table 3.

**[Table 3]**

| Composition | | Mass percentage (%) | | | | | |
|---|---|---|---|---|---|---|---|
| | | Example 1 | | Example 2 | | Example 3 | |
| Protein | Membrane protein (30 to 50 kDa) | 61.5 | 23.1 | 81.5 | 28.7 | 57.2 | 42.8 10.6 |
| | Ribosomal protein (4 to 30 kDa) | | 34.4 | | 46.1 6.7 | | |
| | Others (Molecular weight is not clear) | | 4.0 | | | | 3.8 |
| Residual substances other than protein (Moisture, lipid, sugars, salts, and the like) | | 38.5 | | 18.5 | | 42.8 | |
| Total | | 100 | | 100 | | 100 | |

### (6) Joined Body and Method for Producing The Same (a) Production of Wood Piece Joined Body

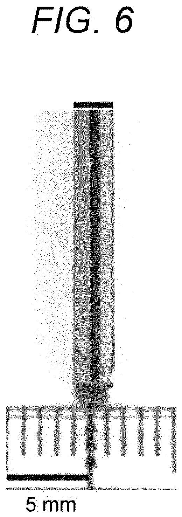

A wood piece joined body was produced by a pressure molding machine. A stainless steel jig (mold) of the pressure molding machine has a cylindrical shape and has a rectangular through-hole having a cross section of 35 mm × 15 mm. A cypress wood workpiece having a size of 35 mm × 15 mm × 2 mm was placed on a stainless steel jig to obtain a first adherend. In addition, 0.7 g of the adhesive of Example 1 obtained above was weighed, and the weighed adhesive was introduced so as to form a substantially uniform layer on the first adherend, thereby obtaining a precursor of an adhesive layer. Further, another cypress wood workpiece (second adherend) having a size of 35 mm × 15 mm × 2 mm was placed on the adhesive layer, and the wood piece was heated and pressurized at a temperature of 130°C and a pressure of 30 MPa for 5 minutes using a hot press machine, thereby obtaining a wood piece joined body (Example 3). It was confirmed that an adhesive layer having a thickness of about 1 mm and formed of an adhesive which was a residue from a host cell was formed between two wood pieces (adherends) (Fig. 6).

### (b) Production of Wood Piece Joined Body

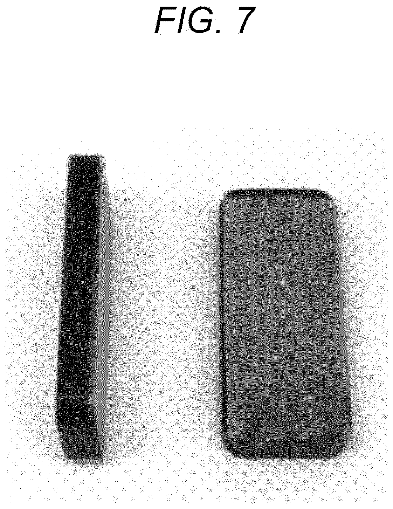

A wood piece joined body was produced by a pressure molding machine in the same manner as described above. A cypress wood workpiece having a size of 35 mm × 15 mm × 2 mm was placed on a stainless steel jig to obtain a first adherend. In addition, 0.7 g of the adhesive of Example 1 obtained above was weighed, and the weighed adhesive was introduced so as to form a substantially uniform layer on the first adherend, thereby obtaining a precursor of a first adhesive layer. Another cypress wood workpiece (second adherend) having a size of 35 mm × 15 mm × 2 mm was placed on the adhesive layer, 0.7 g of the adhesive of Example 1 was introduced to form a substantially uniform layer (a precursor of a second adhesive layer) thereon, and a cypress wood workpiece (third adherend) having a size of 35 mm × 15 mm × 2 mm was placed on the adhesive layer. The laminate was heated and pressurized at a temperature of 130°C and a pressure of 30 MPa for 5 minutes using a hot press machine to obtain a wood piece joined body (Example 4). It was confirmed that the first adhesive layer and the second adhesive layer having a thickness of about 1 mm and formed of the adhesive that was the residue from the host cell were formed between the first adherend and the second adherend and the second adherend and the third adherend, respectively (Fig. 7).

### (c) Production of Wood Chip Joined Body (Wood Chip Residue Composite Molded Body)

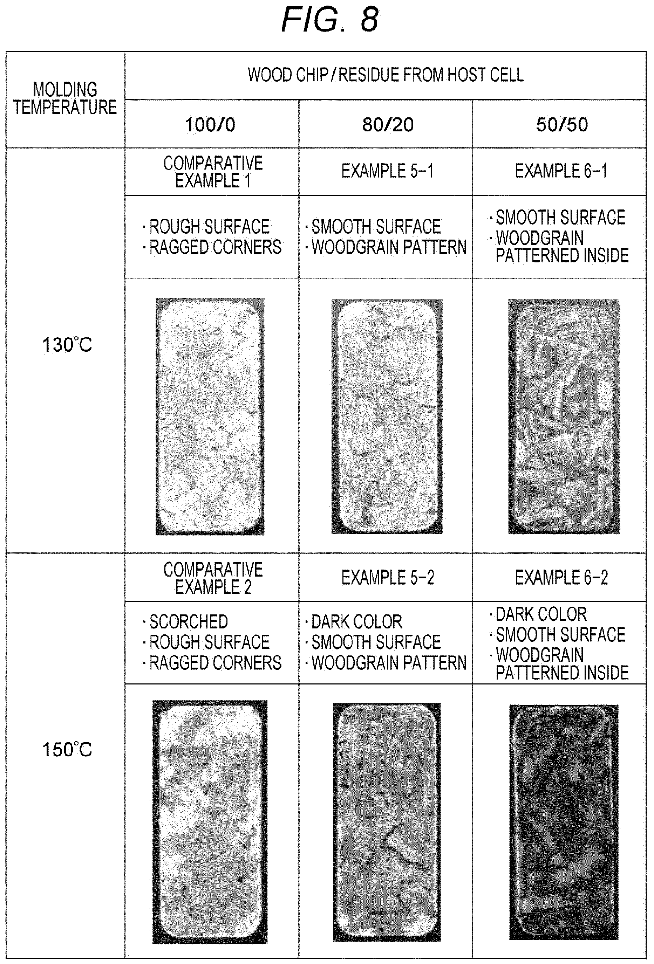

A cypress wood workpiece having a size of 5 mm × 5 mm × 1 cm was crushed using a wood chip joined body (wood chip residue composite molded body) (Millser 800DG IFM-800DG, IWATANI CORPORATION) to prepare a wood chip. The prepared wood chip and the freeze-dried powder of the residues from the host cells of Example 2 were mixed according to the mixing ratio shown in Fig. 8, and a wood chip joined body (wood chip residue composite molded body) of each of Examples 5-1, 5-2, 6-1, and 6-2 was produced at a temperature of 130°C or 150°C according to the production method of (a) of (6). The photograph and appearance observation of the obtained joined body are illustrated in Fig. 8.

### (d) Production of Wood Chip Joined Body (Wood Chip Residue Composite Molded Body)

According to the production method of (a), a rectangular parallelepiped molded body having a size of 35 mm × 25 mm × 1.75 mm was prepared under external pressurization conditions of 73 kN (about 50 MPa) and a molding temperature of 130°C. Mixing ratios of wood chip/residue from host cell in the molded body were 100/0 (molded body of Comparative Example 2), 80/20 (wood chip joined body (wood chip residue composite molded body) of Example 7), 50/50 (wood chip joined body (wood chip residue composite molded body) of Example 8), and 0/100 (molded body of Comparative Example 3).

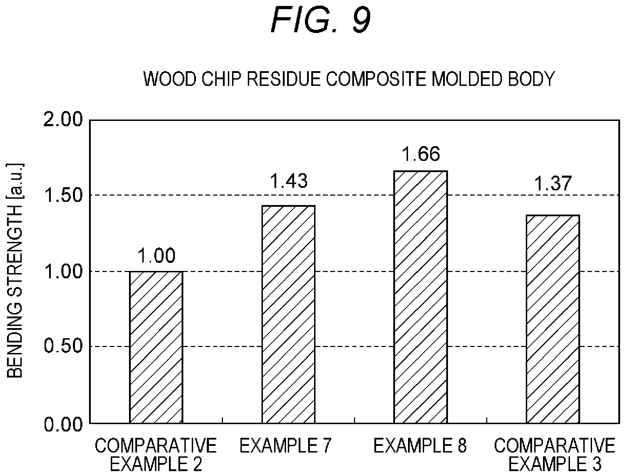

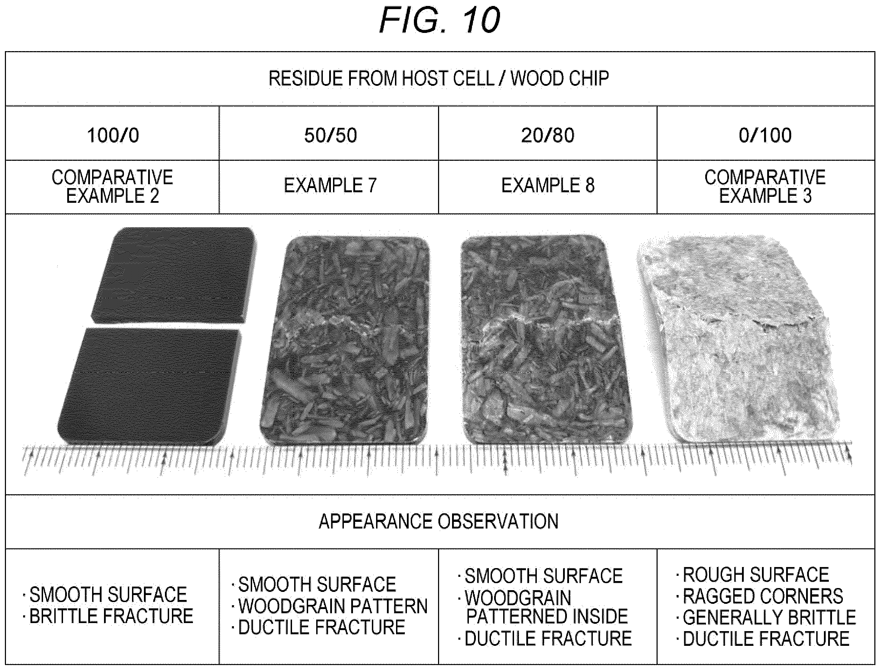

The molded body of Comparative Example 2, the wood chip joined bodies of Examples 7 and 8, and the molded body of Comparative Example 3 were subjected to a three-point bending test using a basket jig in an autograph (AG-X, manufactured by Shimadzu Corporation). The load cell used was 50 kN. At this time, an inter-fulcrum distance of three-point bending was fixed to 27 mm, and the measurement speed was set to 1 mm/min. In addition, a size of the mold molded body was measured with a micro caliper, and the molded body was placed and measured on the jig. A bending elastic modulus was obtained from a displacement (strain) up to 0.05 to 0.25%. The results are illustrated in Fig. 9. When the bending strength of the molded body of Comparative Example 2 was a unit of 1, the maximum stress of the wood chip joined body of Example 7 was a unit of 1.43, and the maximum stress of the wood chip joined body of Example 8 was a unit of 1.66. The maximum stress of the molded body of Comparative Example 3 was a unit of 1.37. The degree of disruption after the bending test and surface observation are illustrated in Fig. 10. That is, when a proportion of the wood chip is large, the disruption form of the molded body tends to be ductile fracture.

### (7) Methods for Producing Mortar Analogue and Concrete Analogue

### (a) Mortar Analogue

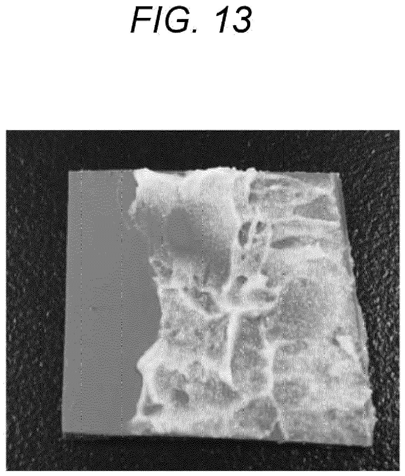

1.0 g of the freeze-dried powder of the residues from the host cells obtained above (Example 2) was weighed, and calcium hydroxide, aluminum chloride, sodium hydroxide, and ion-exchanged water were sequentially added and uniformly mixed with the composition shown in Table 4 to obtain a mortar analogue. The mortar analogue was randomly applied to the substrate (Fig. 13). The mortar analogue has mortar-like physical properties.

**[Table 4]**

| Composition (addition order) | Weight (g) | Mass percentage (%) |
|---|---|---|
| Residue from host cell | 1.0 | 14.9 |
| Ca(OH)₂ | 0.5 | 7.5 |
| AlCl₃·6H₂O | 0.2 | 3.0 |
| 5N NaOH aqueous solution | 1.3 | 19.4 |
| Ion-exchanged water | 3.7 | 55.2 |
| Mortar analogue Total | 6.7 | 100 |

### (b) Concrete Analogue

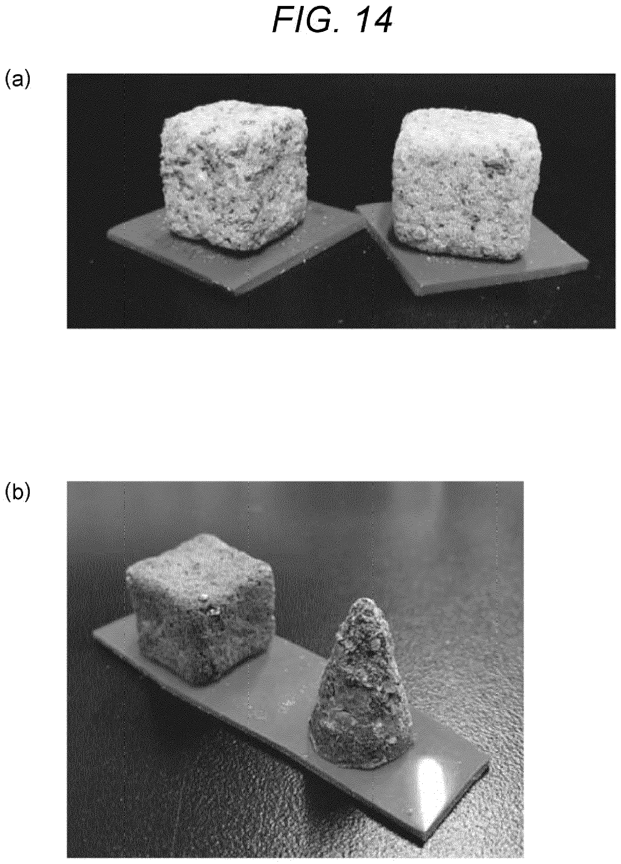

Sea sand (FUJIFILM Wako Pure Chemical Corporation) having a weight of about 1/3 and pebbles having a weight of about 1/3 were added to and mixed with the mortar analogue obtained above (Table 5). The mixture was formed into a cube or cone shape and left at room temperature to obtain a concrete analogue of the residues from the host cells (Fig. 14). The sea sand and pebbles adhered by the mortar analogue were hard and did not collapse even when pressed by applying pressure with fingers or the like.

**[Table 5]**

| Composition (addition order) | | Weight (g) | Mass percentage (%) |
|---|---|---|---|
| Mortar analogue | Residue from host cell | 1.0 | 6.0 |
| | Ca(OH)₂ | 0.5 | 3.0 |
| | AlCl₃·6H₂O | 0.2 | 1.2 |
| | 5N NaOH aqueous solution | 1.3 | 7.7 |
| | Ion-exchanged water | 3.7 | 22.0 |
| Fine aggregate | Sea sand | 4.4 | 26.2 |
| Coarse aggregate | Pebble | 5.7 | 33.9 |
| Concrete analogue | Total | 16.8 | 100 |

## Claims

1. A protein adhesive comprising a protein of 30 KDa or more and 50 KDa or less.

2. The adhesive according to claim 1, further comprising a functional additive.

3. The adhesive according to claim 1 or 2, wherein a content of the protein of 30 KDa or more and 50 KDa or less is 20 mass% or more with respect to a total mass of the adhesive.

4. The adhesive according to any one of claims 1 to 3, wherein a main component of the protein of 30 KDa or more and 50 KDa or less is a membrane protein.

5. The adhesive according to claim 4, further comprising a ribosomal protein, a lipoprotein, and/or a glycoprotein.

6. The adhesive according to any one of claims 1 to 5, wherein a protein of less than 30 KDa is contained in an amount of 5 mass% or more with respect to a total mass of the adhesive.

7. The adhesive according to claim 6, wherein a main component of the protein of less than 30 KDa is a ribosomal protein.

8. The adhesive according to any one of claims 1 to 7,
wherein the protein of 30 KDa or more and 50 KDa or less is a protein contained in a residue from a host cell,
the host cell is a host cell producing a target substance, and
the residue from the host cell is a cell residue obtained after the target substance is collected from the host cell.

9. A protein adhesive comprising a residue from a host cell,
wherein the host cell is a host cell producing a target substance, and
the residue from the host cell is a cell residue obtained after the target substance is collected from the host cell.

10. A joined body comprising: a first object; a second object; and an adhesive layer interposed between the first object and the second object,
wherein the first object and the second object are joined by the adhesive layer, and
the adhesive layer is an adhesive layer formed of a protein adhesive containing a protein of 30 KDa or more and 50 KDa or less.

11. A joined body comprising: a plurality of objects to be adhered; and an adhesive layer formed so as to wrap at least a part between the plurality of objects to be adhered and/or around the plurality of objects to be adhered,
wherein the adhesive layer is an adhesive layer formed of a protein adhesive containing a protein of 30 KDa or more and 50 KDa or less.

12. The joined body according to claim 10 or 11, wherein the adhesive further contains a functional additive, and the adhesive layer contains a functional additive at least on a surface and/or an inner side thereof.

13. The joined body according to any one of claims 10 to 12, wherein the adhesive layer is a layer obtained by subjecting the adhesive to drying or heating and pressurizing treatment.

14. The joined body according to any one of claims 10 to 13, wherein a content of the protein of 30 KDa or more and 50 KDa or less is 20 mass% or more with respect to a total mass of the adhesive layer.

15. The joined body according to claim 12, wherein the functional additive is cellulose.

16. The joined body according to any one of claims 10 to 15,
wherein the protein of 30 KDa or more and 50 KDa or less is a protein contained in a residue from a host cell,
the host cell is a host cell producing a target substance, and
the residue from the host cell is a cell residue obtained after the target substance is collected from the host cell.

17. A joined body comprising: a first object; a second object; and an adhesive layer interposed between the first object and the second object,
wherein the first object and the second object are joined by the adhesive layer,
the adhesive layer is an adhesive layer formed of a protein adhesive containing a residue from a host cell, the host cell is a host cell producing a target substance, and the residue from the host cell is a cell residue obtained after the target substance is collected from the host cell.

18. A joined body comprising: a plurality of objects to be adhered; and an adhesive layer formed so as to wrap at least a part between the plurality of objects to be adhered and/or around the plurality of objects to be adhered,
wherein the adhesive layer is an adhesive layer formed of a protein adhesive containing a residue from a host cell, the host cell is a host cell producing a target substance, and the residue from the host cell is a cell residue obtained after the target substance is collected from the host cell.

19. A method for producing a joined body including a first object, a second object, and an adhesive layer interposed between the first object and the second object,
wherein the first object and the second object are joined by the adhesive layer,
the adhesive layer is an adhesive layer formed of a protein adhesive containing a protein of 30 KDa or more and 50 KDa or less, and
the production method comprises joining the first object and the second object by sequentially laminating the first object, the adhesive, and the second object and forming the adhesive on the adhesive layer by drying and heating and pressurizing treatment.

20. A method for producing a joined body including a plurality of objects to be adhered and an adhesive layer formed so as to wrap at least a part between the plurality of objects to be adhered and/or around the plurality of objects to be adhered,
wherein the adhesive layer is an adhesive layer formed of a protein adhesive containing a protein of 30 KDa or more and 50 KDa or less, and
the production method comprises joining the plurality of objects to be adhered by mixing the plurality of objects to be adhered and the adhesive and forming the adhesive on the adhesive layer by drying or heating and pressurizing treatment.

21. A method for producing a joined body including a first object, a second object, and an adhesive layer interposed between the first object and the second object,
wherein the first object and the second object are joined by the adhesive layer,
the adhesive layer is an adhesive layer formed of a protein adhesive containing a residue from a host cell, the host cell is a host cell producing a target substance, the residue from the host cell is a cell residue obtained after the target substance is collected from the host cell, and
the production method comprises joining the first object and the second object by sequentially laminating the first object, the adhesive, and the second object and forming the adhesive on the adhesive layer by drying and heating and pressurizing treatment.

22. A method for producing a joined body including a plurality of objects to be adhered and an adhesive layer formed so as to wrap at least a part between the plurality of objects to be adhered and/or around the plurality of objects to be adhered,
wherein the adhesive layer is an adhesive layer formed of a protein adhesive containing a residue from a host cell, the host cell is a host cell producing a target substance, the residue from the host cell is a cell residue obtained after the target substance is collected from the host cell, and
the production method comprises joining the plurality of objects to be adhered by mixing the plurality of objects to be adhered and the adhesive and forming the adhesive on the adhesive layer by drying or heating and pressurizing treatment.

23. A ground improvement injection material for enhancing ground strength, comprising the adhesive according to any one of claims 1 to 9.

24. A mortar analogue or a concrete analogue, comprising the adhesive according to any one of claims 1 to 9.
